(19) Europäisches Patentamt / European Patent Office / Office européen des brevets

(11) **EP 0 872 946 B1**

(12) **FASCICULE DE BREVET EUROPEEN**

(45) Date de publication et mention
de la délivrance du brevet:
**01.10.2008 Bulletin 2008/40**

(51) Int Cl.:
***H02K 21/38*** *(2006.01)*

(21) Numéro de dépôt: **98400910.0**

(22) Date de dépôt: **14.04.1998**

(54) **Machine polyphasée sans balai, notamment alternateur de véhicule automobile**

Mehrphasige bürstenlose Maschine, insbesondere Lichtmaschine für automobiles Fahrzeug

Polyphase brushless machine, especially automobile vehicle alternator

(84) Etats contractants désignés:
**DE ES GB IT**

(30) Priorité: **14.04.1997 FR 9704534**

(43) Date de publication de la demande:
**21.10.1998 Bulletin 1998/43**

(73) Titulaire: **VALEO EQUIPEMENTS ELECTRIQUES MOTEUR**
**94000 Creteil (FR)**

(72) Inventeur: **Akemakou, Dokou Antoine**
**94400 Vitry-Sur-Seine (FR)**

(74) Mandataire: **de Lambilly Delorme, Marie Pierre**
**VALEO Systèmes Electriques**
**2, rue André Boulle**
**94046 Créteil Cedex (FR)**

(56) Documents cités:
**EP-A- 0 707 374      DE-A- 3 009 279**

- **ZHI-GANG: "A Novel Electromagnetic Spiral Linear step Motor" CONFERENCE RECORD OF THE INDUSTRY APPLICATIONS CONFERENCE, vol. 1, 2 - 5 octobre 1994, DENVER, US, pages 329-336, XP000514773**
- **PATENT ABSTRACTS OF JAPAN vol. 9, no. 266 (E-352), 23 octobre 1985 & JP 60 113649 A (HITACHI KINZOKU), 20 juin 1985,**

**Description**

La présente invention a trait d'une façon générale aux machines tournantes telles que les alternateurs pour véhicules automobiles.

La génératrice polyphasée que constitue un alternateur classique de véhicule automobile comporte généralement un stator à l'intérieur duquel tourne un rotor pourvu d'un bobinage d'excitation. Ce bobinage est alimenté par des balais en contact avec deux bagues collectrices prévues sur une partie en saillie de l'arbre du rotor.

Le recours à des balais présente toutefois des inconvénients, parmi lesquelles la nécessité d'une longueur axiale importante de l'alternateur, un ensemble de balais et de collecteurs qui accroissent le coût de revient, ainsi que les défauts de fonctionnement engendrés, notamment du fait de l'usure, par un contact défaillant entre les balais et les bagues collectrices.

Il existe dans l'état de la technique certaines propositions visant à réaliser des machines tournantes, pouvant convenir comme alternateurs de véhicules automobiles, qui soient dépourvus de balais.

Ainsi l'on connaît un alternateur dans lequel les griffes des deux roues polaires du rotor, qui normalement s'interpénètrent, sont tronquées de manière à permettre le passage, dans un plan transversal, d'un support pour un bobinage d'excitation fixe disposé à l'intérieur des roues polaires. Cette approche se fait toutefois au détriment du rendement de la machine, car les surfaces d'entrefer sont alors très sensiblement diminuées. En outre, une machine de ce type, pour une courbe débit/vitesse donnée, est sensiblement plus lourde qu'une machine classique, ce qui est particulièrement désavantageux dans le cas des alternateurs embarqués.

On connaît également un alternateur dans lequel deux roues polaires à griffes imbriquées sont montées en porte-à-faux, à partir d'une extrémité axiale de la machine, entre un bobinage d'excitation fixe, interne, et des bobinages de stator externes.

Cette solution connue présente également des inconvénients, notamment par le fait que la dimension axiale de la machine est nécessairement accrue, ainsi que son poids. En outre, l'accroissement des entrefers au niveau du rotor diminue le rendement de la machine.

Par ailleurs, dans les deux cas évoqués ci-dessus, la conception de la machine nécessite impérativement de prendre en compte les phénomènes électromagnétiques non seulement dans le plan perpendiculaire à l'axe de rotation, c'est-à-dire dans deux dimensions, mais également dans la direction de cet axe, c'est-à-dire dans la troisième dimension de l'espace.

Cette nécessité d'une conception tridimensionnelle de la machine rend la modélisation et l'optimisation des différents paramètres extrêmement délicates et fastidieuses.

On connaît en outre par le document EP-0 707 374 une machine à commutation de flux, dépourvue de balais, qui présente l'avantage de pouvoir être plus aisément modélisée et optimisée de façon purement bidimensionnelle.

Cette machine connue présente toutefois l'inconvénient d'être limitée à un fonctionnement monophasé, alors que les machines triphasées peuvent être souhaitables dans de très nombreuses applications, notamment en termes de rendement électromagnétique et en termes de simplicité et d'économie des moyens de redressement et de lissage associés.

On connaît enfin par le document DE 30 09 279 A1 une machine électrique à commutation de flux qui comporte des segments avec encoches pour bobinages d'induits qui peuvent être indépendants. Toutefois, aucun déphasage grâce à un agencement particulier des encoches et des dents de rotor n'est envisagé dans ce document.

La Demanderesse a découvert qu'il était possible d'exploiter la technique de la commutation de flux pour réaliser, avec une grande flexibilité et en conservant une conception et une optimisation bidimensionnelle, des machines polyphasées variées.

Ainsi la présente invention propose une machine électrique à commutation de flux, telle que définie dans la revendication 1.

Des aspects préférés, mais non limitatifs, de la machine selon l'invention sont définis dans les revendications dépendantes.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :

la figure 1 est une représentation schématique, faite de façon linéaire, de la structure rotorique et statorique d'une machine tournante selon la présente invention, et
les figures 2 à 9 illustrent schématiquement en coupe transversale huit formes de réalisation de la structure rotorique et statorique d'une machine tournante selon la présente invention,
la figure 10 illustre schématiquement en coupe transversale une généralisation possible de la structure rotorique et statorique d'une machine selon l'invention, et
la figure 11 est une vue en coupe transversale d'un exemple de réalisation concrète d'une structure de rotor et de stator selon l'invention, sans les bobinages et aimants associés.

On .observera tout d'abord que la description qui va suivre est faite en référence à un mode de fonctionnement en génératrice. L'homme du métier comprendra bien évidemment à sa lecture comment les machines fonctionnent en moteur.

On notera également que, d'une figure à l'autre, des éléments ou parties identiques ou similaires sont désignés dans la mesure du possible par les mêmes signes de référence.

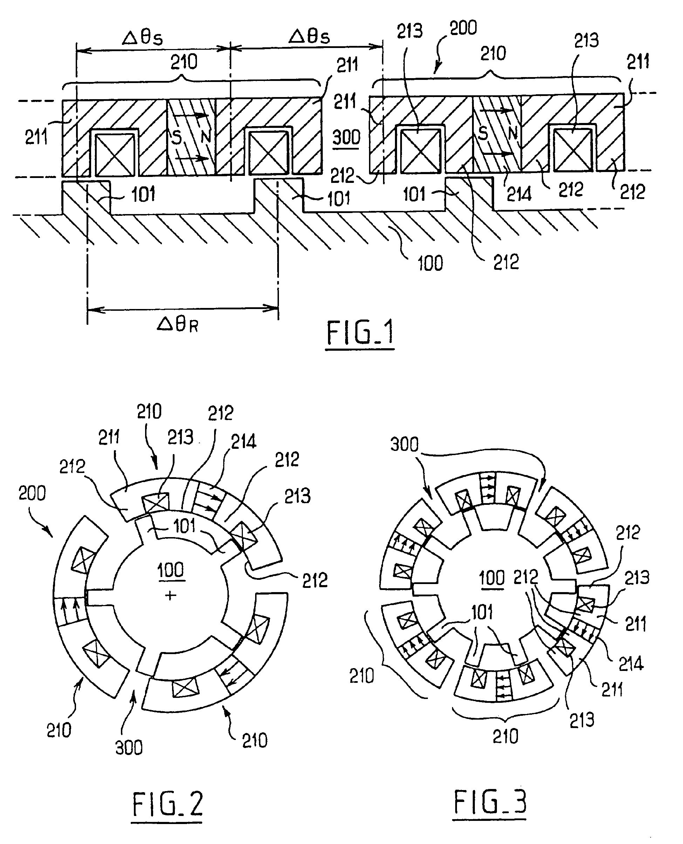

En référence tout d'abord à la figure 1, on a représenté, de façon linéaire par souci didactique, une partie d'un stator et d'un rotor pouvant équiper une machine électrique à commutation de flux selon l'invention.

Le rotor 100 comporte le long d'un bord une pluralité de dents rotoriques 101 qui sont de préférence régulièrement espacées d'un pas noté $\Delta\Theta_R$.

Le stator 200 comporte quant à lui une pluralité de cellules 210, chaque cellule comportant deux éléments statoriques 211 de préférence identiques, de profil en forme de U définissant sur sa face tournée vers le rotor une encoche recevant un bobinage d'induit 213. Chaque élément 211 définit ainsi deux dents 212 situées de part et d'autre de l'encoche. Entre les deux éléments 211 est placé un aimant permanent d'excitation 214 dont l'orientation N/S, comme illustré, est dirigée d'un élément statorique 211 vers son voisin. Chaque cellule 210 est séparée de la cellule voisine par un espace vide 300 dont la largeur est de préférence égale à celle des aimants 214. Dans ce cas, le pas des différents éléments statoriques 211, noté $\Delta\Theta_S$, est constant.

Comme le décrit en particulier le document EP-A-0 707 374, une condition nécessaire pour qu'une machine équipée d'un rotor et d'un stator tels que décrit ci-dessus est que le pas $\Delta\Theta_R$ soit voisin du pas $\Delta\Theta_S$.

Dans ce cas, les paires de dents rotoriques 101 ont pour objet, lorsqu'elles se trouvent au droit de deux dents statoriques 212 délimitant à la fois un aimant d'excitation 214 et un brin 213 du bobinage d'induit, d'appliquer à ce dernier un flux magnétique d'excitation maximal. La rotation du rotor crée donc dans ce bobinage un courant alternatif.

L'idée sur laquelle se fonde la présente invention est de concevoir la géométrie du rotor et du stator pour que la position de paires de dents du rotor par rapport aux éléments statoriques soit différente d'une cellule à l'autre, ceci étant obtenu en choisissant judicieusement la valeur de $\Delta\Theta_R$ pour une valeur $\Delta\Theta_S$ donnée.

En particulier, si l'on souhaite réaliser une machine triphasée, c'est-à-dire comportant trois bobinages d'induit indépendants dans trois cellules de stator 210, on peut démontrer que la relation suivante doit être statisfaite :

$$2.\Delta\Theta_S = 2.\Delta\Theta_R + (m/3).\Delta\Theta_R \qquad\qquad (1)$$

avec $m \in \{-2,-1,1,2\}$.

On choisira dans la suite m = -1.

Avec l'hypothèse ci-dessus, à savoir le recours à trois cellules 210 comportant deux éléments 211 chacune, c'est-à-dire à six éléments 211 régulièrement répartis sur la circonférence d'un stator circulaire, on a :

$$\Delta\Theta_S = 2\pi/6 = \pi/3$$

La relation (1) ci-dessus donne alors :

$$\Delta\Theta_R = 2\pi/5$$

Ainsi, en choisissant un rotor comportant cinq dents 101 équiréparties à sa périphérie, on obtient bien une machine tournante à commutation de flux triphasée.

Par ailleurs, les valeurs m = -2, m = 1 et m = 2 donneraient respectivement 4, 7 et 8 dents 101 au rotor.

On comprend en outre que le raisonnement ci-dessus s'applique aisément à un nombre de phases tout à fait quelconque.

La machine ainsi obtenue est schématiquement représentée sur la figure 2.

On observe sur cette figure que, du fait des différences de valeurs nécessairement existantes entre $\Delta\Theta_R$ et $\Delta\Theta_S$, les alignements entre les dents rotoriques 101 et les dents statoriques 212 jouxtant les encoches ne sont jamais optimaux. Les pertes de flux qui en résultent sont toutefois largement acceptables.

Naturellement, il est possible d'appliquer la démarche ci-dessus à un stator comportant un nombre de cellules 210 égal à un multiple entier du nombre de phases.

Par exemple, lorsque le stator 200 est équipé de six cellules 210, le calcul ci-dessus conduit à un rotor comportant dix dents rotoriques 101 angulairement équidistantes.

Cette variante de réalisation est illustrée sur la figure 3. Dans ce cas, les bobinages d'induit des trois phases sont agencés de façon séquentielle : phase 1, phase 2, phase 3, phase 1, phase 2, phase 3; dans cet exemple précis, les deux bobinages d'une même phase se trouvent donc dans deux cellules 210 diamétralement opposées.

On observera ici que, selon que l'on cherche à privilégier la tension de sortie ou le courant, on relie les deux bobinages d'induit 213 d'une même phase soit en série, soit en parallèle.

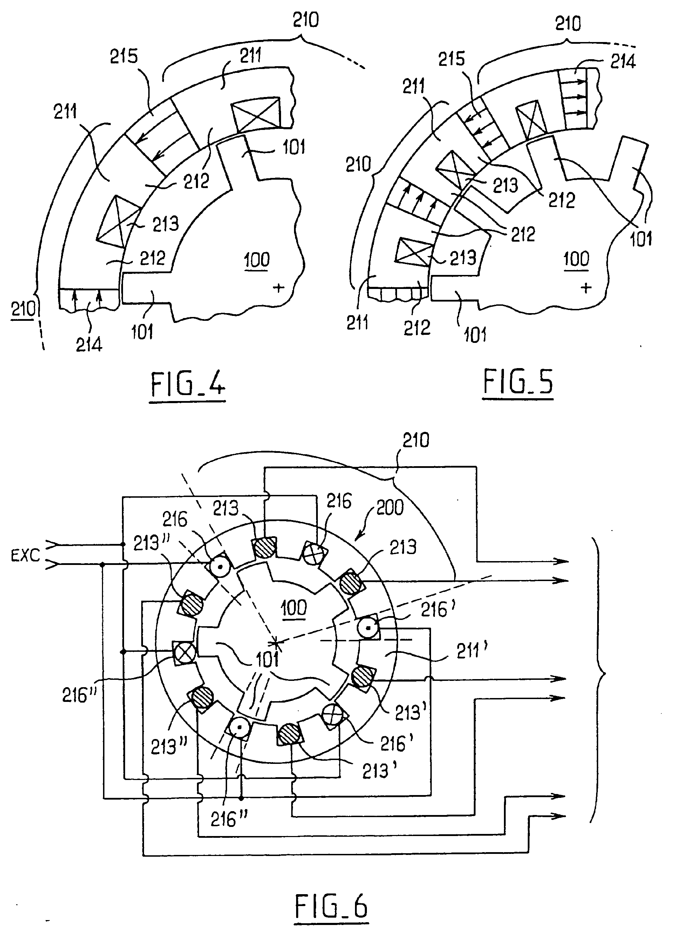

La figure 4 illustre une variante de réalisation de la structure rotorique et statorique de la figure 2, dans laquelle des aimants permanents additionnels 215 ont été insérés dans les espaces vides 300 qui séparaient deux à deux les cellules de stator 210.

Ces aimants 215 sont placés avec une orientation N/S inverse de celle des aimants d'excitation 214, comme illustré.

Ces aimants 215 permettent d'une part de renforcer le flux d'excitation, et d'autre part d'améliorer le découplage entre les différentes phases, dans la mesure où ils font obstacle à la sortie des lignes de flux au niveau des limites angulaires de chacune des cellules.

La figure 5 illustre quant à elle la même variante, mais appliquée à la structure rotorique et statorique illustrée sur la figure 3.

On observera ici que l'excitation par aimants permanents, telle qu'illustrée sur les figures 2 à 5, peut être remplacée par une excitation par bobinages.

Ainsi la figure 6 illustre le cas d'une structure triphasée à trois cellules de stator 210 et à cinq dents de rotor, analogue à la figure 2, dans laquelle l'excitation est réalisée à l'aide de bobinages entrelacés avec les bobinages d'induit.

Ainsi l'on a représenté trois bobinages d'induit 213, 213' et 213" correspondant aux trois phases, et trois bobinages d'excitation 216, 216' et 216" enroulés dans les sens indiqués. Les trois bobinages d'induit et les trois bobinages d'excitation sont de préférence ménagés dans douze encoches régulièrement réparties sur la face interne d'une carcasse de stator unique désignée par la référence 211'.

Chaque cellule ou phase 210 est délimitée comme indiqué en traits tiretés.

Dans ce type de mise en oeuvre, chaque bobinage d'excitation 216 crée un flux magnétique essentiellement radial qui va circuler dans l'une des deux dents statoriques 212 qu'elle circonscrit dès que cette dent sera en contact magnétique avec l'une des dents 101 du rotor, et le phénomène constaté est voisin de celui obtenu avec une excitation par aimants permanents.

Avantageusement, et afin de disposer d'une tension d'excitation aussi élevée que possible lorsque la machine est reliée au réseau de bord d'un véhicule automobile, les trois bobinages d'excitation 216, 216' et 216" sont reliés en parallèle aux bornes d'une entrée d'excitation EXC, comme illustré.

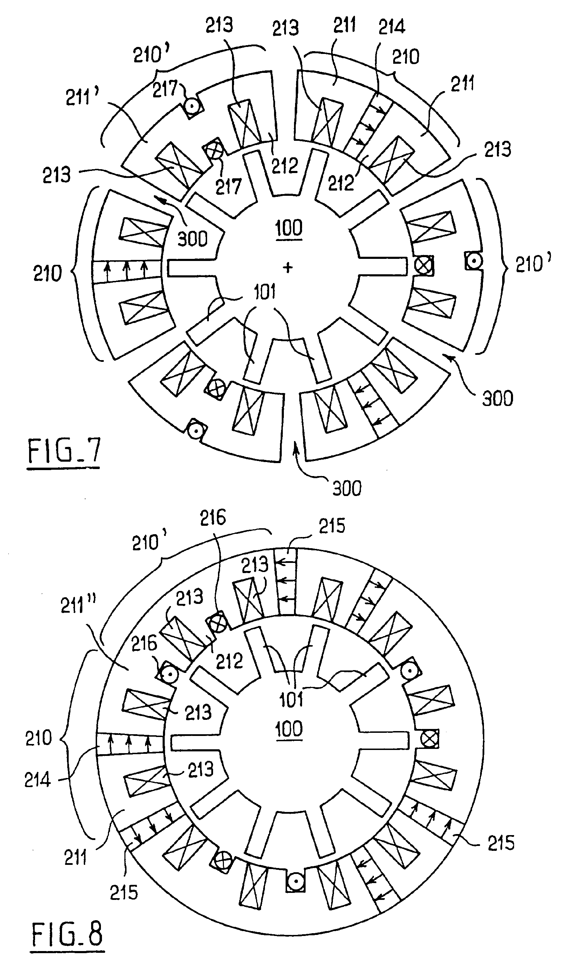

La figure 7 illustre une structure rotorique et statorique à six cellules 210 séparés par des espaces vides 300, de façon analogue à la figure 3. Dans ce cas cependant, la machine est à excitation mixte. Ainsi trois premières cellules 210 possédant entre deux éléments rotoriques adjacents 211 de profil en "U" un aimant d'excitation 214, tandis que les trois autres cellules 210' possèdent chacune un élément de carcasse rotorique unique 211' définissant deux encoches internes pour le bobinage d'induit 213 et, à mi-chemin entre ces encoches en direction circonférentielle, un bobinage d'excitation 217 s'étendant dans un plan axialo-radial et reçu dans deux autres encoches formées respectivement dans la face intérieure et dans la face extérieure de la partie de carcasse 211'.

De façon préférée, afin d'équilibrer le comportement électrique lors de la rotation, les cellules 210 et 210' sont disposées de façon alternée. Ainsi chaque phase possède une cellule 210 à excitation par aimant et une cellule 210' à excitation par bobinage.

La figure 8 illustre une variante de réalisation qui diffère de la figure 7 en trois aspects :

- de première part, deux cellules adjacentes 210, 210' sont regroupées sur un même élément de carcasse 211";
- de seconde part, les cellules 210' à excitation par bobinage possèdent non plus un bobinage s'étendant dans un plan axialo-radial, mais un bobinage 216 analogue à celui de la figure 6, c'est-à-dire s'étendant dans un plan tangent; on observera à cet égard que chacun de ces bobinages possède un brin s'étendant à l'intérieur du bobinage de phase 213 concerné, et un brin s'étendant entre les deux bobinages de phase du même groupe de deux cellules;
- de troisième part, les éléments de carcasse 211" sont séparés par des aimants inverses 215 de découplage et de renforcement de flux, de façon analogue aux figures 4 et 5.

On observera ici que, dans toutes les formes de réalisation qui précèdent, le pas rotorique $\Delta\Theta_R$, c'est-à-dire l'écart angulaire entre deux dents rotoriques 101, n'est pas égal au pas statorique $\Delta\Theta_S$, c'est-à-dire l'écart angulaire entre deux dents statoriques 212 homologues de deux éléments statoriques 210 adjacents.

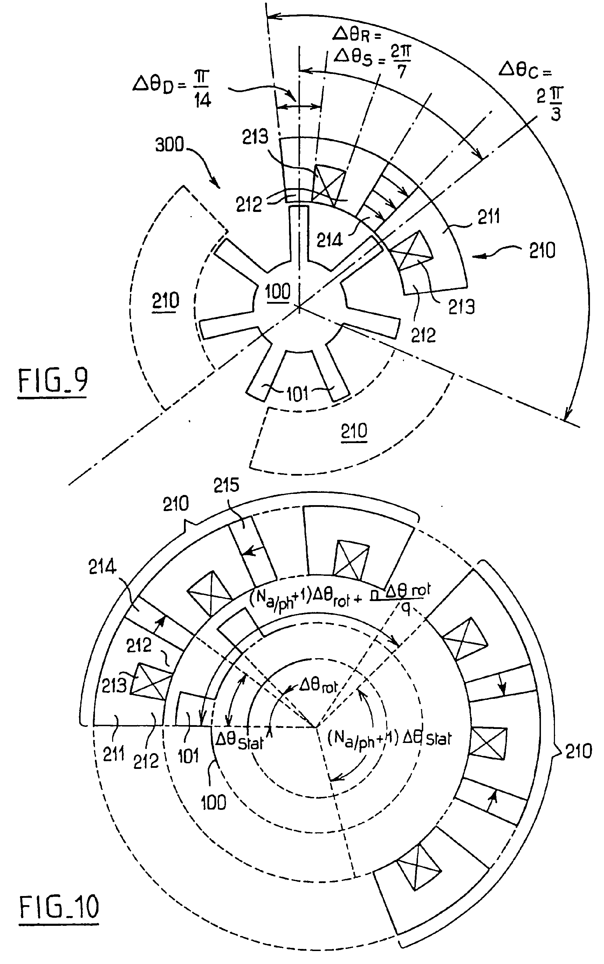

On va maintenant décrire en référence à la figure 9 une forme de réalisation qui, tout en conservant à la machine son caractère polyphasé, et notamment triphasé, permet d'avoir des pas rotorique et statorique, respectivement $\Delta\Theta_R$ et $\Delta\Theta_S$, qui soient égaux.

Dans cet exemple particulier, on prévoit un rotor 100 possèdant sept dents espacées d'un pas rotorique $\Delta\Theta_P$ égal à $2\pi/7$.

On prévoir par ailleurs trois cellules statoriques 210 comportant chacune, comme dans le cas de la figure 2, deux éléments statoriques 211 recevant un bobinage d'induit 213 entre deux dents 212 et séparés par un aimant permanent d'excitation 214. Dans chaque cellule, comme indiqué ci-dessus, le pas statorique $\Delta\Theta_S$ est aussi égal à $2\pi/7$.

Pour assurer un déphasage électrique de $2\pi/3$ entre les première et seconde cellules 210, il est donc nécessaire et suffisant que l'écart angulaire, noté $\Delta\Theta_S$, entre ces deux cellules soit égal à :

$$2\pi/7 \;+\; 2\pi/7 \;+\; (1/3).2\pi/7 \;=\; 2\pi/3$$

ce qui permet bien d'obtenir trois cellules 210 régulièrement espacées de $2\pi/3$.

En outre, on donne de façon préférée la même ouverture angulaire $\Delta\Theta_D$ aux dents 212, aux encoches pour bobinages d'induit 213 et aux aimants d'excitation 214. Dans ce cas précis, cette ouverture angulaire est de $(2\pi/7)/4$, soit

$$\Delta\Theta_D \;=\; \pi/14 .$$

Dans le cas ci-dessus, pour optimiser le couplage entre les dents rotoriques 101 et les dents statoriques 212, lesdites dents rotoriques 101 possèdent également une ouverture angulaire de $\pi/14$.

Par ailleurs, l'ouverture angulaire des espaces 300 entre les cellules voisines 210 est dans ce cas égal à

$$2\pi/3 \;-\; (7.\pi/14) \;=\; \pi/6$$

Maintenant en référence à la figure 10, on va expliquer comment généraliser la présente invention à une machine polyphasée possédant un nombre quelconque de cellules par phase.

On posera préalablement :

$N_M$ : nombre de machines élémentaires sur la circonférence du stator

q : nombre de phases de chaque machine élémentaire

$N_C$ : nombre d'aimants d'excitation par phase de chaque machine élémentaire

m : nombre entier représentatif de la valeur du déphasage entre deux machines élémentaires.

Chaque phase est constituée, dans le présent exemple, par un ensemble de $N_C+1$ pièces statoriques en "U" 211 séparées les unes des autres par $N_C$ aimants.

Afin de déterminer le décalage angulaire des phases successives, on considère que chacune de ces phases occupe une plage angulaire égale à $(N_C+1).\Delta\Theta_S$, en y incorporant fictivement un $(N_C+1)$ième aimant illustré en tiretés sur la figure et désigné par la référence 214'.

Les phases successives devant par définition être espacées de $(m/q).\Delta\Theta_P$, une machine élémentaire à q phases va donc occuper une plage angulaire égale à

$$q.[(N_C+1).\Delta\Theta_R \;+\; ((m/q).\Delta\Theta_R]$$

Une machine à $N_M$ machines élémentaires va donc occuper sur la circonférence du stator une plage égale à

$$N_M.q.[(N_C+1).\Delta\Theta_R \;+\; (m/q).\Delta\Theta_R] \;=\; 2\pi \qquad (2)$$

En prenant l'hypothèse d'un stator à éléments statoriques 211 régulièrement répartis, on a par ailleurs :

$$k . \Delta\Theta_S = 2\pi \qquad\qquad\qquad (3)$$

k étant un nombre entier.

On observera ici que ce nombre k est nécessairement supérieur à 6, dans l'hypothèse d'une machine polyphasée à plusieurs machines de base.

En outre, afin d'assurer une commutation de flux convenable par les dents 101 du rotor, on choisit $AO_R$ et $\Delta\Theta_S$ de préférence assez proches l'un de l'autre, et on choisit de préférence une relation du type :

$$(7/8) . \Delta\Theta_S \leq \Delta\Theta_R \leq (5/4) . \Delta\Theta_S$$

On notera pour terminer que l'on applique de préférence à la valeur de m un signe positif, sachant qu'un signe négatif risquera d'aboutir à un recouvrement intempestif entre deux phases successives, ou à un découplage insuffisant dû à une trop grande proximité entre phases.

On va décrire succinctement ci-dessous les machines optimales obtenues à partir des développements ci-dessus respectivement dans le cas d'une machine diphasée et d'une machine triphasée, en prenant comme hypothèse $\Delta\Theta_S = \Delta\Theta_R$. Dans ce cas, le nombre k obtenu est précisément le nombre de dents 101 au rotor.

Dans le cas d'une machine diphasée (q = 2 et m = ±1), on obtient à partir des relations (2) et (3) :

$$k = 2N_M . [(N_C+1) \pm 1/2]$$

A titre d'exemple, on obtient

- pour m = +1, $N_M$ = 2 et $N_C$ = 1

$$k = 4 . [(1+1) + 1/2] = 10$$

- pour m = +1, $N_M$ = 2 et $N_C$ = 2

$$k = 4 . [(2+1) + 1/2] = 14$$

- pour m = -1, $N_M$ = 2 et $N_C$ = 1

$$k = 4 . [(1+1) - 1/2] = 6$$

- pour m = -1, $N_M$ = 2 et $N_C$ = 2

$$k = 4 . [(2+1) - 1/2] = 10$$

Dans le cas d'un moteur triphasé, on a q = 3, tandis que m ∈ {-2,-1,1,2}. En prenant la même hypothèse simplificatrice que précédemment, soit $\Delta\Theta_S = \Delta\Theta_R$, on obtient:

$$k = 3N_M . [(N_C+1) + m/3]$$

A titre d'exemple, on obtient

- pour m = +1, $N_M$ = 1 et $N_C$ = 1

$$k = 3.[(1+1) + 1/3] = 7$$

- pour m = +1, $N_M$ = 1 et $N_C$ = 2

$$k = 3.[(2+1) + 1/3] = 10$$

- pour m = -1, $N_M$ = 2 et $N_C$ = 3

$$k = 3.[(3+1) + 1/3] = 13$$

Par ailleurs, on a cherché à déterminer le nombre optimal de dents de rotor lorsque sont imposés les paramètres suivants de la machine :

- son rayon extérieur $R_{ext}$;
- son rayon d'entrefer $R_{ent}$;
- sa taille d'entrefer E.

On pourrait démontrer que le nombre de dents optimal, noté $k_{opt}$, est obtenu par la formule suivante :

$$k_{opt} = \pi / (4.\sqrt{[(E/R_{ent}).((R_{ext}/R_{ent}) - (1 + (E/2.R_{ent}))))]})$$

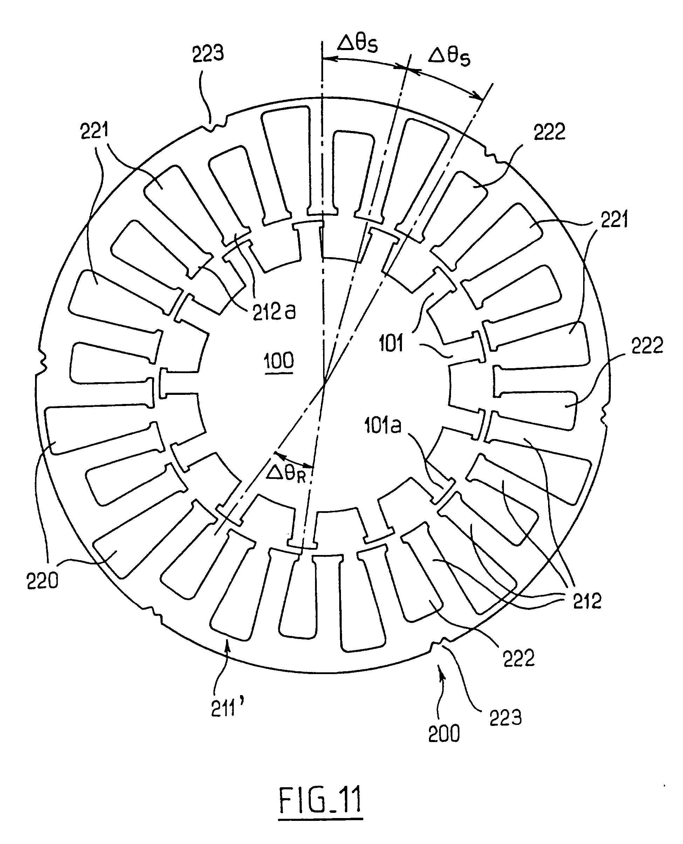

Enfin on a représenté sur la figure 11 un exemple d'une forme de réalisation concrète de la structure statorique et de la structure rotorique d'une machine tournante selon l'invention, réalisée en particulier selon la solution illustrée sur la figure 8 (machine avec excitation par bobinages et par aimants et pourvue en outre d'aimants de découplage).
On observe que chaque dent rotorique 101 et chaque dent statorique 212 possèdent un pied légèrement élargi, respectivement 101a et 212a.
On observe également que le stator comporte un élément de carcasse ferromagnétique unique 211' dans lequel sont formées vingt-quatre encoches régulièrement espacées de 15°. Le pas statorique $\Delta\Theta_S$ est dans ce cas de 30°.
Ces encoches sont réparties en trois groupes de profondeurs différentes, selon qu'elles reçoivent des bobinages de phases, des bobinages d'excitation ou des aimants.
Plus précisément, les encoches les plus profondes 220 sont destinées à recevoir les aimants d'excitation 214 et les aimants de découplage 215 (non représentés), les encoches de profondeur intermédiaire 221 sont destinées à recevoir les bobinages d'excitation 216 (non représentés), et enfin les encoches les moins profondes 222 reçoivent les bobinages de phases 213 (non représentés).
Enfin il est prévu à la périphérie extérieure du stator 211' six renfoncements 223 pour des picots de soudure des tôles empilées constituant la carcasse du stator, de façon classique en soi.
Le rotor 100 comporte quant à lui treize dents 101 régulièrement espacées deux à deux d'un angle $\Delta\Theta_R$ égal à $2\pi/13$.

**Revendications**

1. Machine électrique polyphasée à commutation de flux comportant un stator (200) et un rotor (100) le stator (200) comportant sur sa circomférence au moins une machine élémentaire ayant 9 phases, le stator (200) comportant sur sa face interne une série d'encoches (222) abritant une pluralité de bobinages d'induit de phase indépendants (213) qui sont situés dans une série de cellules individuelles (210) réparties angulairement sur la circonférence du stator (200), le stator (200) comportant en outre une série de logements (220, 221) pour des moyens d'excitation, et le rotor (100) comportant une pluralité de dents de commutation de flux (101) aptes à sélectivement établir, par paires, des circuits magnétiques fermés passant à travers les bobinages d'induits (213), les dents (101) du rotor étant régulièrement espacées angulairement de telle sorte que les positions angulaires de différentes paires de dents puissant présenter par rapport aux différentes cellules Individuelles des écarts angulaires prédéterminés, **caractérisée en ce que** la géométrie des structures rotorique et statorique de la machine électrique polyphasée répond à la condition suivante :

$$N_N . q . [ (N_{\dot{c}}+1) . \Delta\Theta_R + (m/q) . \Delta\Theta_R ] = k . \Delta\Theta_S = 2\pi$$

où

- $N_H$ est le nombre de machines élémentaires sur la circonférence du stator,
- q est le nombre de phases de chaque machine élémentaire,
- $N_C$ est le nombre d'aimants d'excitation par phase de chaque machine élémentaire,
- m est un nombre entier positif ou négatif représentatif de la valeur du déphasage entre deux machines élémentaires, et est compris entre -(q-1) et +(q-1),
- $\Delta\Theta_R$ est l'intervalle angulaire constant entre deux dents rotoriques adjacentes, ou pas rotorique,
- $\Theta\Delta_S$ est l'intervalle angulaire constant entre deux brins adjacents de bobinage d'induit, ou pas statorique, et
- k est un nombre entier.

2. Machine selon la revendication 1, **caractérisée en ce que** chaque cellule individuelle (210) comporte une structure statorique (211) définissant une paire d'encoches espacées pour deux brins d'un bobinage d'induit (213), lesdites encoches étant délimitées latéralement par deux dents statoriques (212), et un moyen d'excitation (214; 216; 217) apte à établir dans l'une ou l'autre des dents statoriques situées à l'intérieur dudit bobinage d'induit un champ magnétique variant selon la position angulaire mutuelle des dents rotoriques (101) et des dents statoriques (212).

3. Machine selon la revendication 2, **caractérisée en ce que** les cellules individuelles (210) sont séparées les unes des autres par des vides (300).

4. Machine selon la revendication 2, **caractérisée en ce que** les cellules individuelles (210) sont séparées les unes des autres par des aimants permanents de découplage (215) dont l'orientation de champ s'oppose à celle des moyens d'excitation (214; 216; 217).

5. Machine selon l'une des revendications 1 à 4, **caractérisé en ce que** le moyen d'excitation de chaque cellule (210) comporte un aimant permanent (214) disposé entre deux éléments statoriques (211) de profil en forme général de "U" définissant lesdites encoches et lesdites dents statoriques (212).

6. Machine selon l'une des revendications 1 à 4, **caractérisée en ce que** le moyen d'excitation de chaque cellule (210) comporte un bobinage d'excitation (216; 217) disposé dans deux encoches d'un élément statorique unique (211'; 211"), dont l'une est située sensiblement à mi-chemin entre deux encoches pour bobinage d'induit (213) formées également dans ledit élément statorique.

7. Machine selon la revendication 6, **caractérisée en ce que** le bobinage d'excitation (217) est disposé dans deux encoches prévues dans la surface interne et dans la surface externe de l'élément statorique, pour engendrer au niveau dudit bobinage un champ magnétique essentiellement tangent.

8. Machine selon la revendication 6, **caractérisée en ce que** le bobinage d'excitation (216) est disposé dans deux encoches prévues toutes deux dans la surface interne de l'élément statorique, pour engendrer au niveau dudit bobinage un champ magnétique essentiellement radial.

9. Machine selon l'une des revendications 6 à 8,
**caractérisée en ce que** les différents bobinages d'excitation (216; 217) sont branchés en parallèle sur une même source de courant (EXC).

10. Machine selon les revendications 5 et 6 prises en combinaison, **caractérisée en ce qu'**elle comprend des paires de cellules réalisées dans un même élément de sctructure (211") abritant deux bobinages d'induit (213) correspondant à deux phases différentes, un aimant (214) pour l'excitation de l'un des bobinages d'induit et un bobinage d'excitation (216) pour l'excitation de l'autre bobinage d'induit.

**11.** Machine selon l'une des revendications 1 à 10, **caractérisée en ce que** les brins des bobinages d'induits (213) sont angulairement équidistants sur toute la circonférence intérieure du stator (200), l'intervalle angulaire (300) entre les différentes cellules étant sensiblement égal à la plage angulaire couverte par une encoche de réception d'un brin de bobinage d'induit (213).

**12.** Machine selon l'une des revendications 1 à 10, **caractérisée en ce que** que les brins des bobinages d'induits (213) situés au sein d'une même cellule (210) ou d'un même groupe de cellules sont séparés par un intervalle angulaire constant ($\Delta\Theta_S$), et **en ce que** l'intervalle angulaire entre des brins de bobinage d'induit successifs situés dans deux cellules (210) ou groupes de cellules distincts est différent dudit intervalle angulaire constant.

**13.** Machine selon la revendication 12, **caractérisé en ce que** ledit intervalle angulaire constant ($\Delta\Theta_S$) est identique à l'intervalle angulaire ($\Delta\Theta_R$) entre deux dents rotoriques (101) adjacentes.

**14.** Machine selon l'une des revendications 1 à 13, **caractérisée en ce que** le pas rotorique et le pas statorique satisfont à la relation suivante :

$$(7/8).\Delta\Theta_S \leq \Delta\Theta_R \leq (5/4).\Delta\Theta_S.$$

**15.** Machine selon la revendication 14', **caractérisé en ce que** le pas statorique est égal au pas rotorique, et **en ce que** la géométrie des structures rotorique et statorique de la machine répond à la condition suivante :

$$N_M.q.(N_C+1) + N_H.m = k.$$

**16.** Machine selon l'une des revendications 1 à 13, **caractérisée en ce qu'**elle comprend une machine élémentaire, unique à crois cellules individuelles (210) régulièrement réparties et abritant respectivement les bobinages d'induit (213) de trois phases, et **en ce que** le rotor comporte un nombre de dents rotoriques (101) choisi parmi les valeurs 4, 5, 7 et 8, et préférentiellement égal à 5.

**17.** Machine selon l'une des revendications 1 à 13, **caractérisée en ce qu'**elle comprend deux machines élémentaires à trois cellules individuelles (210) chacune, régulièrement réparties, et abritant respectivement les bobinages d'induit de trois phases, et **en ce que** le rotor comporte un nombre de dents rotoriques (101) choisi parmi les valeurs 8, 10, 14 et 16, et préférentiellement égal à 10.

**18.** Machine selon l'une des revendications 1 à 17, **caractérisée en ce qu'**elle comprend une carcasse statorique unique (211') comportant au moins deux séries d'encoches internes (220, 221, 222) aptes à abriter respectivement les bobinages d'induit (213) et les aimants (214) ou bobinages (216) d'excitation.

**19.** Machine selon l'une des revendications 1 à 18, **caractérisée en ce qu'**elle constitue un alternateur polyphasé de véhicule automobile.

**Claims**

**1.** Polyphase electric machine with switching of flow, comprising a stator (200) and a rotor (100), the stator (200) comprising on its circumference at least one elementary machine which has q phases, the stator (200) comprising on its inner surface a series of notches (222) which accommodate a plurality of independent phase armature windings (213) situated in a series of individual cells (210) which are distributed angularly on the circumference of the stator (200), the stator additionally comprising a series of receptacles (220, 221) for excitation means, and the rotor (100) comprising a plurality of flow-switching teeth (101) which can establish selectively in pairs closed magnetic circuits which pass through the armature windings (213), the teeth (101) of the rotor being spaced regularly angularly such that the angular positions of different pairs of teeth can have predetermined angular gaps relative to the different individual cells, **characterised in that** the geometry of the rotor and stator structures of the polyphase electric machine fulfil the following conditions:

$$N_N . q . ((N_c+1) . \Delta\theta_R + (m/q) . \Delta\theta_R) = k . \Delta\theta_S = 2\pi$$

wherein

- $N_N$ is the number of elementary machines on the circumference of the stator;
- q is the number of phases of each elementary machine;
- $N_c$ is the number of excitation magnets per phase of each elementary machine;
- m is a positive or negative whole number representative of the dephasing value between two elementary machines, and is contained between -(q-1) and +(q-1);
- $\Delta\theta_R$ is the constant angular interval between two rotor teeth, or rotor pitch;
- $\Delta\theta_S$ is the constant angular interval between two adjacent strands of armature winding, or stator pitch; and
- k is a whole number.

2. Machine according to claim 1, **characterised in that** each individual cell (210) comprises a stator structure (211) which defines a pair of notches which are spaced for two strands of an armature winding (213), the said notches being delimited laterally by two stator teeth (212), and an excitation means (214; 216; 217) which can establish in one or the other of the stator teeth situated inside the said armature winding a magnetic field which varies according to the mutual angular position of the rotor teeth (101) and of the stator teeth (212).

3. Machine according to claim 2, **characterised in that** the individual cells (210) are separated from one another by gaps (300).

4. Machine according to claim 2, **characterised in that** the individual cells (210) are separated from one another by permanent decoupling magnets (215), the field of orientation of which opposes that of the excitation means (214; 216; 217).

5. Machine according to one of claims 1 to 4, **characterised in that** the excitation means of each cell (210) comprises a permanent magnet (214) which is disposed between two stator elements (211) with a profile in the general form of a "U" which defines the said notches and the said stator teeth (212).

6. Machine according to one of claims 1 to 4, **characterised in that** the excitation means of each cell (210) comprise an excitation winding (216; 217) which is disposed in two notches of a single stator element (211'; 211 "), one of which is situated substantially halfway between two notches for the armature winding (213) which are also formed in the said stator element.

7. Machine according to claim 6, **characterised in that** the excitation winding (217) is disposed in two notches provided in the inner surface and in the outer surface of the stator element, in order to generate at the level of the said winding a magnetic field which is substantially tangent.

8. Machine according to claim 6, **characterised in that** the excitation winding (216) is provided in two notches which are both contained in the inner surface of the stator element, in order to generate at the level of the said winding a magnetic field which is substantially radial.

9. Machine according to one of claims 6 to 8, **characterised in that** the different excitation windings (216; 217) are branched in parallel on a single current source (EXC).

10. Machine according to claims 5 and 6 taken in combination, **characterised in that** it comprises pairs of cells provided in a single structural element (211") which accommodates two armature windings (213) corresponding to two different phases, a magnet (214) for the excitation of one of the armature windings and an excitation winding (216) for the excitation of the other armature winding.

11. Machine according to one of claims 1 to 10, **characterised in that** the strands of the armature windings (213) are angularly equidistant around the entire inner circumference of the stator (200), the angular interval (300) between the different cells being substantially equal to the angular range covered by a notch for receipt of a strand of armature winding (213).

**12.** Machine according to one of claims 1 to 10, **characterised in that** the strands of the armature windings (213) which are situated within a single cell (210) or a single group of cells are separated by a constant angular interval ($\Delta\theta_S$), and **in that** the angular interval between successive strands of armature winding situated in two cells (210) or distinct groups of cells is different from the said constant angular interval.

**13.** Machine according to claim 12, **characterised in that** the said constant angular interval ($\Delta\theta_S$) is identical to the angular interval ($\Delta\theta_R$) between two adjacent rotor teeth (101).

**14.** Machine according to one of claims 1 to 13, **characterised in that** the rotor pitch and the stator pitch fulfil the following ratio:

$$(7/8).\ \Delta\theta_S \leq \Delta\theta_R \leq (5/4).\ \Delta\theta_S.$$

**15.** Machine according to claim 14, **characterised in that** the stator pitch is equal to the rotor pitch, and **in that** the geometry of the rotor and stator structures of the machine fulfils the following condition:

$$N_N.q(N_c+1) + N_N.m = k$$

**16.** Machine according to one of claims 1 to 13, **characterised in that** it comprises a single elementary machine with three individual cells (210) which are regularly distributed and accommodate respectively the three-phase armature windings (213), and **in that** the rotor comprises a number of rotor teeth (101) which is selected from amongst the values 4, 5, 7 and 8, and is preferably equal to 5.

**17.** Machine according to one of claims 1 to 13, **characterised in that** it comprises two elementary machines with three regularly distributed individual cells (210) each, which accommodate respectively the three-phase armature windings, and **in that** the rotor comprises a number of rotor teeth (101) which is selected from amongst the values 8, 10, 14 and 16, and is preferably equal to 10.

**18.** Machine according to one of claims 1 to 17, **characterised in that** it comprises a single stator carcass (211') comprising at least two series of inner notches (220, 221, 222) which can accommodate respectively the armature windings (213) and the magnets (214) or excitation coils (216).

**19.** Machine according to one of claims 1 to 18, **characterised in that** it constitutes a polyphase alternator for a motor vehicle.

**Patentansprüche**

**1.** Elektrische Mehrphasenmaschine mit Flussumschaltung, umfassend einen Stator (200) und einen Rotor (100), wobei der Stator (200) an seinem Umfang wenigstens eine Elementarmaschine mit 9 Phasen umfasst, wobei der Stator (200) auf seiner Innenseite eine Reihe von Nuten (222) enthält, die mehrere unabhängige Phasenankerwicklungen (213) aufnehmen, die sich in einer Reihe von auf dem Umfang des Stators (200) winklig verteilten Einzelzellen (210) befinden, wobei der Stator (200) außerdem eine Reihe von Aufnahmen (220, 221) für Erregermittel umfasst und wobei der Rotor (100) mehrere Flussumschaltzähne (101) aufweist, die in der Lage sind, selektiv, paarweise, geschlossene Magnetkreise herzustellen, die durch die Ankerwicklungen (213) verlaufen, wobei die Zähne (101) des Rotors winklig gleichmäßig beabstandet sind, so dass die Winkelpositionen verschiedener Zahnpaare im Verhältnis zu den verschiedenen Einzelzellen vorbestimmte Winkelabstände aufweisen können, **dadurch gekennzeichnet, dass** die Geometrie der Rotor- und Statorstrukturen der elektrischen Mehrphasenmaschine die folgende Bedingung erfüllt:

$$N_M.q.[(N_C+1).\Delta\theta_R + (m/q). \Delta\theta_R] = k.\Delta\theta_S = 2\pi$$

wobei gilt:

- $N_M$ ist die Anzahl von Elementarmaschinen auf dem Umfang des Stators,
- q ist die Anzahl der Phasen jeder Elementarmaschine,
- $N_C$ ist die Anzahl von Erregermagneten pro Phase jeder Elementarmaschine,
- m ist eine positive oder negative ganze Zahl, die für den Wert der Phasenverschiebung zwischen zwei Elementarmaschinen repräsentativ ist, und liegt zwischen -(q-1) und +(q-1),
- $\Delta\theta_R$ ist der konstante Winkelabstand zwischen zwei benachbarten Rotorzähnen oder der Rotorabstand,
- $\Delta\theta_S$ ist der konstante Winkelabstand zwischen zwei benachbarten Endstücken einer Ankerwicklung oder der Statorabstand, und
- k ist eine ganze Zahl.

2. Maschine nach Anspruch 1, **dadurch gekennzeichnet, dass** jede Einzelzelle (210) eine Statorstruktur (211), die ein Paar beabstandeter Nuten für zwei Endstücke einer Ankerwicklung (213) definiert, wobei die besagten Nuten seitlich durch zwei Statorzähne (212) begrenzt sind, sowie ein Erregermittel (214; 216; 217) umfasst, das in der Lage ist, in dem einen oder dem anderen der im Innern der besagten Ankerwicklung befindlichen Statorzähne ein Magnetfeld zu erzeugen, das sich in Abhängigkeit von der wechselseitigen Winkelposition der Rotorzähne (101) und der Statorzähne (212) verändert.

3. Maschine nach Anspruch 2, **dadurch gekennzeichnet, dass** die Einzelzellen (210) durch Zwischenräume (300) voneinander getrennt sind.

4. Maschine nach Anspruch 2, **dadurch gekennzeichnet, dass** die Einzelzellen (210) durch Trennpermanentmagnete (215) voneinander getrennt sind, deren Feldausrichtung zu derjenigen der Erregermittel (214; 216; 217) entgegengesetzt ist.

5. Maschine nach einem der Ansprüche 1 bis 4, **dadurch gekennzeichnet, dass** das Erregermittel jeder Zelle (210) einen Permanentmagneten (214) umfasst, der zwischen zwei Statorelementen (211) mit generell U-förmigem Profil angeordnet ist, welche die besagten Nuten und die besagten Statorzähne (212) definieren.

6. Maschine nach einem der Ansprüche 1 bis 4, **dadurch gekennzeichnet, dass** das Erregermittel jeder Zelle (210) eine Erregerwicklung (216; 217) umfasst, die in zwei Nuten eines einzigen Statorelements (211'; 211") angeordnet ist, von denen sich eine etwa in der Mitte zwischen zwei Nuten für die Ankerwicklung (213) befindet, die ebenfalls in dem besagten Statorelement ausgebildet sind.

7. Maschine nach Anspruch 6, **dadurch gekennzeichnet, dass** die Erregerwicklung (217) in zwei Nuten angeordnet ist, die in der Innenfläche und in der Außenfläche des Statorelements vorgesehen sind, um in Höhe der besagten Wicklung ein im Wesentlichen tangentiales Magnetfeld zu erzeugen.

8. Maschine nach Anspruch 6, **dadurch gekennzeichnet, dass** die Erregerwicklung (216) in zwei Nuten angeordnet ist, die beide in der Innenfläche des Statorelements vorgesehen sind, um in Höhe der besagten Wicklung ein im Wesentlichen radiales Magnetfeld zu erzeugen.

9. Maschine nach einem der Ansprüche 6 bis 8, **dadurch gekennzeichnet, dass** die verschiedenen Erregerwicklungen (216; 217) in Parallelschaltung an ein und dieselbe Stromquelle (EXC) angeschlossen sind.

10. Maschine nach den Ansprüchen 5 und 6 in Kombination, **dadurch gekennzeichnet, dass** sie Zellenpaare umfasst, die in ein und demselben Strukturelement (211 ") ausgeführt sind, das zwei Ankerwicklungen (213), die zwei verschiedenen Phasen entsprechen, einen Magneten (214) für die Erregung einer der Ankerwicklungen und eine Erregerwicklung (216) für die Erregung der anderen Ankerwicklung aufnimmt.

11. Maschine nach einem der Ansprüche 1 bis 10, **dadurch gekennzeichnet, dass** die Endstücke der Ankerwicklungen (213) auf dem gesamten Innenumfang des Stators (200) winklig abstandsgleich sind, wobei der Winkelabstand (300) zwischen den verschiedenen Zellen in etwa identisch ist mit dem Winkelbereich, der durch eine Nut zur Aufnahme eines Endstücks einer Ankerwicklung (213) abgedeckt wird.

**12.** Maschine nach einem der Ansprüche 1 bis 10, **dadurch gekennzeichnet, dass** die Endstücke der Ankerwicklungen (213), die sich im Innern ein und derselben Zelle (210) oder ein und derselben Zellengruppe befinden, durch einen konstanten Winkelabstand ($\Delta\theta_S$) getrennt sind und **dass** der Winkelabstand zwischen aufeinanderfolgenden Endstücken einer Ankerwicklung, die sich in zwei verschiedenen Zellen (210) oder Zellengruppen befinden, von dem besagten konstanten Winkelabstand verschieden ist.

**13.** Maschine nach Anspruch 12, **dadurch gekennzeichnet, dass** der besagte konstante Winkelabstand ($\Delta\theta_S$) mit dem Winkelabstand ($\Delta\theta_R$) zwischen zwei benachbarten Rotorzähnen (101) identisch ist.

**14.** Maschine nach einem der Ansprüche 1 bis 13, **dadurch gekennzeichnet, dass** der Rotorabstand und der Statorabstand der folgenden Verhältnisgleichung entsprechen:

$$(7/8).\Delta\theta_S \leq \Delta\theta_R \leq (5/4).\Delta\theta_S.$$

**15.** Maschine nach Anspruch 14, **dadurch gekennzeichnet, dass** der Statorabstand gleich dem Rotorabstand ist und dass die Geometrie der Rotor- und Statorstrukturen der Maschine die folgende Bedingung erfüllt:

$$N_M.q.(N_C+1) + N_M.m = k.$$

**16.** Maschine nach einem der Ansprüche 1 bis 13, **dadurch gekennzeichnet, dass** sie eine einzige Elementarmaschine mit drei Einzelzellen (210) umfasst, die gleichmäßig verteilt sind und die jeweils Ankerwicklungen (213) von drei Phasen aufnehmen, und **dass** der Rotor Rotorzähne (101) umfasst, deren Anzahl aus den Werten 4, 5, 7 und 8 ausgewählt wird und vorzugsweise gleich 5 ist.

**17.** Maschine nach einem der Ansprüche 1 bis 13, **dadurch gekennzeichnet, dass** sie zwei Elementarmaschinen mit jeweils drei Einzelzellen (210) umfasst, die gleichmäßig verteilt sind und die jeweils Ankerspulen von drei Phasen aufnehmen, und **dass** der Rotor Rotorzähne (101) umfasst, deren Anzahl aus den Werten 8, 10, 14 und 16 ausgewählt wird und vorzugsweise gleich 10 ist.

**18.** Maschine nach einem der Ansprüche 1 bis 17, **dadurch gekennzeichnet, dass** sie ein einziges Statorgehäuse (211') umfasst, das wenigstens zwei Reihen von Innennuten (220, 221, 222) enthält, die in der Lage sind, die Ankerwicklungen (213) und die Magnete (214) oder Erregerwicklungen (216) aufzunehmen.

**19.** Maschine nach einem der Ansprüche 1 bis 18, **dadurch gekennzeichnet, dass** sie einen Mehrphasen-Wechselstromgenerator für Kraftfahrzeuge bildet.

FIG.1

FIG.2

FIG.3

FIG_4

FIG_5

FIG_6

FIG.7

FIG.8

FIG.9

FIG.10

$$\underline{\text{FIG.11}}$$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0707374 A
- DE 3009279 A1